# EUROPEAN PATENT APPLICATION

(11) **EP 3 514 025 A1**
(43) Date of publication of application: **24.07.2019**
(21) Application number: 18181570.5
(22) Date of filing: 04.07.2018
(51) Int. Cl.: B60S 1/48, F16L 21/03

(54) **CONNECTOR FOR QUICK CONNECTING OF FLUID LINES**

(30) Priority: 18.01.2018 SI 201800009
(71) Applicant: S.E.P. d.o.o., 8230 Mokronog (SI)
(72) Inventor: KASTELEC, Luka, 8322 Stopice (SI); MARINC, Danilo, 8222 Otocec (SI)
(74) Representative: Grünecker Patent- und Rechtsanwälte PartG mbB

(57) **Abstract**

A connector for quick connecting according to the applied invention is executed as a flowing connector (1) with an adapter (4) or as a closing connector (11) with a blind hole (10). Both executions have a housing (2) with a connection opening (5), and a clip (3), where in the internal wall of the connection opening (5) a circular gutter (8) of semicircular cross-section is formed, in which an O-ring (7) is inserted. The connector for quick connecting according to the invention is used as a flowing or closing element in the line for fluid distribution within the system for cleaning glass surfaces on land, water and air vehicles and it enables the use of a single pump for the operation of the entire washing system.

## Description

### The subject of the invention

The subject of the invention is a connector for quick connecting of lines for fluid distribution in washing systems on vehicles, which includes, inter alia, an O-ring i.e. an O-seal ring and is intended for installation in land, water and air vehicles. Depending on the execution, it is intended for flow connection of lines or for sealing of lines or tubes in the system for cleaning windshield glass, rear windows, side windows, glass roofs, windows, headlight lenses, camera lenses and the like on vehicles. The presented connector can serve also for closing the flow or inflow of fluid from the corresponding pump. In view of the specified applicability, the connector can be installed on the pumps as well as in the distribution lines in the washing systems on vehicles and as such it serves as a coupling or flowing connector or as a closing connector.

### Technical problem

The technical problem solved by this invention is such a construction of the connector for quick connecting of the washing system on vehicles, which enables the insertion of a serial standard O-ring in a way to prevent it from falling out of the circular gutter in which it is placed. In this way, it is not necessary to build in an additional protection that would prevent an O-ring from falling out of the gutter. This applies for the flowing connector and for the closing connector that represent preferential feasibility examples of the connector for quick connecting according to the invention.

### Current state of the art

Several solutions of the execution and building in of D-rings and O-rings or sealing rings into connectors for quick connecting of pipe lines in the system for washing glass surfaces on vehicles are known.
D-rings simplify the design and the execution of the tightness of the housing of couplings or connectors, including simple tools for their manufacture, but their weakness and deficiency is in the fact that during manipulation and transport they can fall out from the circular groove where they were put. This problem is usually solved by adding a blocking pin into the connector housing, which is removed and discarded during assembly.

Weakness and deficiency of connectors and connecting elements for which O-rings are used for sealing is in the fact that the circular gutter for placing an O-ring in is of unsuitable design or execution that does not ensure that the O-ring does not fall out of it.

As it is known, a D-ring is a sealing ring of a cross-section of the D shape, whereas an O-ring is a sealing ring of the cross-section of the O shape.

According to patent document EP 1 915 561 B1, a coupling for the distribution of the fluid line is known, in which a sealing ring is formed as a D-seal, which is inserted into the circular gutter with a flat resting surface that suits its D shape. The D-seal is protected from falling out of the circular gutter with a ridge-blocking ring. Weakness and deficiency of this solution is primarily in the fact that the D-seal is of a non-standard execution and, consequently, it must be specially produced as it is not available on the market, meaning that expensive special tools must be produced as well. The manufacturing process of these D-seals is demanding and costly. Furthermore, weakness and deficiency of this solution is in the fact that the shape of the D-seal requires the production and building in of an additional ring with a ridge for blocking the seal so that it does not fall out of the circular gutter into which it is placed. Regardless of this type of D-seal protector, it is still possible that it falls out of the groove during manipulation and transport; consequently, it is necessary to build in an additional protective element, which makes the execution of the connecting element more expensive.

Furthermore, according to patent document EP 1 740 876 B1, a coupling for the distribution within the fluid conducting system is known, with an O-seal inserted into the corresponding circular gutter of the U cross-section. Owing to the U cross-section, the O-seal often falls out of it. Therefore, an additional circular ridge is made at the circular groove to prevent the O-seal from falling out of the groove. As the circular ridge does not ensure a fix placing of the O-seal in the circular groove, an additional protective insert, which supports or closes the circular groove with the inserted O-seal, is inserted into the coupling housing. This is why this execution is complicated and expensive.

### Description of the invention

The connector for quick connecting according to the applied invention is intended for connecting fluid lines in the washing systems for cleaning glass surface on all types of land, water and air vehicles. As such, it is intended for flow coupling and for block sealing in the systems for cleaning windshield glass, rear windows, side windows, glass roofs, windows, headlight lenses, camera lenses and the like on vehicles. It can be installed on pumps as well as in the distribution tube lines and serves as a coupling or as a closing part.

As previously described, the connector for quick connecting according to the applied invention is executed as a flowing connector in the sense of a coupling element enabling the flow of fluid or as a closing connector in the sense of a coupling element that makes it impossible for the fluid to outflow from the pump or from individual lines.

In view of the foregoing, the connector for quick connecting, depending on its execution, is used in the first feasibility example to close the flow of the fluid, and in the second feasibility example for flow connection of distribution lines within the same washing system in the means of transport, i.e. on land, air and water vehicles.

In the first feasibility example, the connector for quick connecting represents a closing connector, whereas in the second feasibility example it represents a flowing connector.

The execution of the connector for quick connecting, functioning as a closing connector, within a washing system enables installation of a single pump with two exits, which represents a rational unification and typisation of the execution of a washing system on vehicles. Thereby, it is possible to use at the same time one and the other execution of the connector, i.e. a flowing and/or closing connector, on the corresponding pump with two exits. When just a single inflow of fluid is required in the washing system of a vehicle, a closing connector is placed on one exit of the pump and a flowing connector on the other exit of the pump. In this way, it is simpler to build in elements into the washing systems of vehicles as both executions of the connector according to the invention enable the use of one pump type only with one exit watertight closed and with the other flow connected with the fluid distribution. In some other feasibility example, both exits of the pump can be flow connected with the mentioned distribution of the washing system on vehicles.

The connector for quick connecting between the pump and the distribution of the washing system on vehicles according to the applied invention will be more precisely described in relation to two feasibility examples and figures, which show as follows:
- Fig. 1: assembly of the flowing connector according to the invention, in orthogonal projection and side view, first feasibility example
- Fig. 2: the same as in Fig. 1, only in longitudinal cross-section A-A
- Fig. 3: assembly of the closing connector according to the invention, in orthogonal projection and side view, second feasibility example
- Fig. 4: the same as in Fig. 3, only in longitudinal cross-section B-B
whereby the reference numerals in the figures indicate as follows:
- 1: flowing connector
- 2: housing
- 3: clip
- 4: adapter
- 5: connection opening
- 6: semicircular groove
- 7: O-ring
- 8: circular gutter of semicircular cross-section
- 9: flow opening
- 10: blind hole
- 11: closing connector

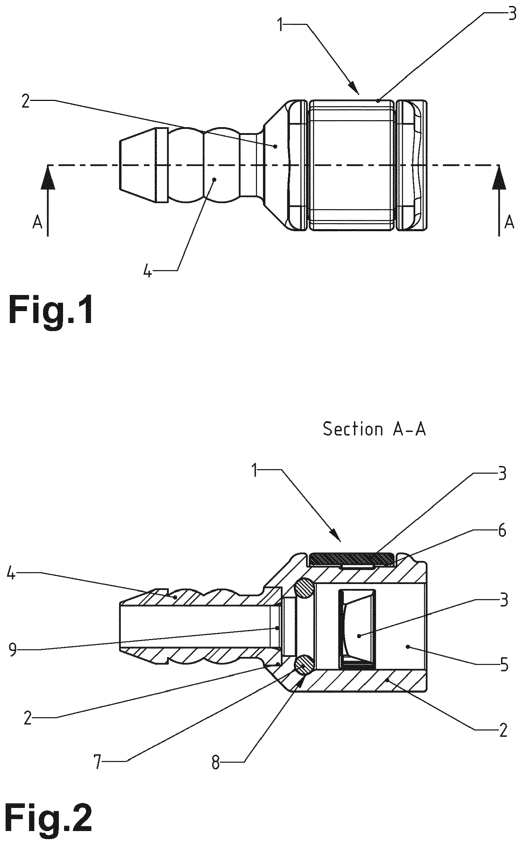

Figures 1 and 2 show the first feasibility example of a connector for quick connecting according to the invention. It refers to the connector-flowing connector 1 consisting of a housing 2 that has an adapter 4 with a flow opening 9 on one side, whereas on the opposite end of the housing 2, a connection opening 5 of a larger diameter is made. The openings 5 and 9 are made in a centrical way and they lie in the same horizontal axis.

On the side of the adapter 4, at the flow opening 9, into the wall of the connection opening 5, a circular gutter 8 of semi-circular cross-section is circularly formed, into which an O-ring 7 is inserted. Such an execution of the circular gutter 8 prevents effectively the O-ring 7 inserted into it from falling out, without any additional protection.

On the housing 2, in the semicircular groove 6, there is positioned a clip 3 by which other elements such as a pump, connecting elements of the washing system, and the like are fixed via connection opening 5. The semicircular groove 6 is formed in the outer surface of the housing 2 so that it surrounds half of its extent, it is of rectangular cross-section and prevents the clip 3 from falling out of it.

The flowing connector 1 with the adapter 4 presents a connecting element within the distribution of the washing system. The adapter 4 can be of various executions and shapes, depending on the execution and shape of the element it is connected with. In the given example, the tubes are of different internal and external shapes and cross-sections.

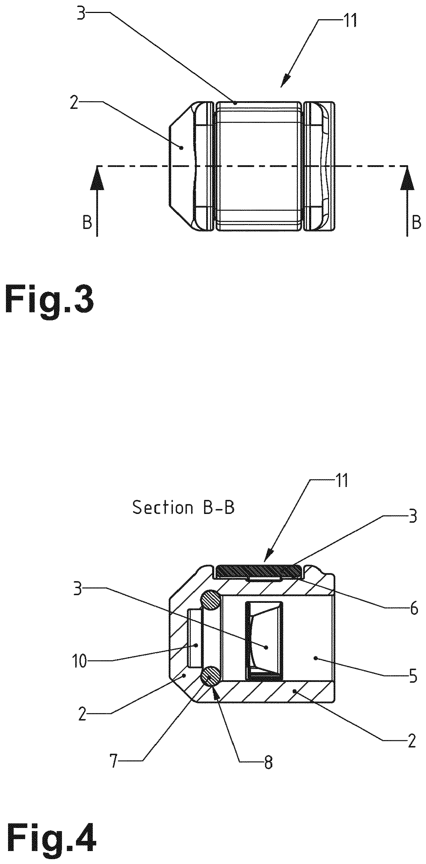

In Figures 3 and 4, the closing connector 11 is shown, representing the second feasibility example of a connector for quick connecting according to the invention. It consists of a housing 2 with a connection opening 5 and a clip 3, which is inserted into a semicircular groove 6 on the external circumference of the housing 2. It is executed without a connecting adapter.

At a blind hole 10, a circular gutter 8 of the semi-circular cross-section, in which the O-ring 7 is inserted, is circularly formed into the internal wall of the connection opening 5. Such an execution of the circular gutter 8 prevents the O-ring 7 inserted into it from falling out and no additional protection is required for this purpose.

On the housing 2 of the closing connector 11, the clip 3 is arranged in the semicircular groove 6, with which other elements, such as a pump, connecting elements of the washing system, and the like are fixed via connection opening 5. The semicircular groove 6 is formed in the outer surface of the housing 2 so that it surrounds half of its extent, it is of rectangular cross-section, and prevents the clip 3 from falling out of it.

The closing connector 11 is intended for closing the flow from the pump at one of its exits not required by a certain execution of the washing system on vehicles.

## Claims

1. A connector for quick connecting of fluid distribution lines in washing systems of vehicles, which is formed either as a flowing connector (1) with an adapter (4) or as a closing connector (11) with a blind hole (10), wherein both executions have a housing (2) with a connection opening (5) and a clip (3) formed in semicircular groove (6), and wherein an O-ring (7) is inserted into circular gutter (8), which is made into the internal wall of the connection opening (5), **is characterised by the fact** that the circular gutter (8) is of semicircular cross-section.
